# EUROPÄISCHE PATENTSCHRIFT

(11) **EP 2 708 480 B1**
(45) Veröffentlichungstag und Bekanntmachung des Hinweises auf die Patenterteilung: **15.07.2015**
(21) Anmeldenummer: 13162761.4
(22) Anmeldetag: 08.04.2013
(51) Int. Cl.: B65G 53/52, F16L 57/00, F16L 57/06

(54) **Förderrohranordnung mit Verschleißanzeige**
Feed pipe arrangement with wear indicator
Agencement tubulaire de transport avec indicateur d'usure

(30) Priorität: 14.09.2012 DE 102012108614
(43) Veröffentlichungstag der Anmeldung: 19.03.2014
(73) Patentinhaber: Esser -Werke GmbH & Co. KG, 59581 Warstein (DE)
(72) Erfinder:
(74) Vertreter: Griepenstroh, Jörg

(56) Entgegenhaltungen:
- EP-A1- 1 384 694
- DE-A1- 19 821 637
- DE-B3-102006 038 989
- DE-B3-102008 009 009

## Beschreibung

Die vorliegende Erfindung betrifft eine Förderrohranordnung für den Feststofftransport gemäß den Merkmalen im Oberbegriff von Patentanspruch 1.

Aus dem Stand der Technik ist es bekannt, Feststoffe durch Förderrohre zu transportieren. Hierbei wird beispielsweise Beton, Kies oder Sand pneumatisch oder hydraulisch durch Rohrstränge befördert, wobei die Rohrstränge aus mehreren miteinander verbundenen Förderrohren zusammengesetzt sind. Um die Förderrohre selbst zu einem Rohrstrang zusammenzusetzen, wobei auch ein Austausch einzelner Förderrohre ermöglicht ist, sind die einzelnen Rohrkörper der Förderrohre jeweils an ihren Enden über Kupplungen miteinander verbunden. Zur Koppelung zweier Rohrkörper ist an jedem Ende eines jeweiligen Rohrkörpers ein Rohrbund angesetzt, wobei die zusammengesetzten und verbundenen Rohrbunde dann einen Kupplungsbund ausbilden.

Während des Feststofftransports sind die Rohre selber einem hohen abrasiven Verschleiß ausgesetzt, wobei die Feststoffe mit Betriebsdrücken von mehr als 80 bar durch die Rohrleitungen gepumpt werden. Die in Rede stehenden Rohrleitungen werden insbesondere als Förderrohre in Autobetonpumpen eingesetzt. Hierbei wird Beton an Baustellen zur Errichtung von Gebäuden, Brücken oder Staudämmen mittels der Autobetonpumpe angefahren und von einem Vorratsbehälter über die Rohrleitungen dem Verwendungszweck zugeführt. Die in Rede stehenden Förderrohre können jedoch auch bei jeglichem anderen Fluid oder aber Feststofftransport eingesetzt werden, beispielsweise bei der Sandgewinnung in Baggerseen oder aber auch in Beton oder Kieswerken.

Um den Verschleiß zu minimieren und/oder die Standzeiten der Rohrstränge zu erhöhen, ist der Einsatz von doppellagigen bzw. doppelwandigen Rohrkörpern aus dem Stand der Technik bekannt. Beispielsweise sind solche doppellagigen Förderrohre aus der DE 33 24 658 C2 bekannt. Hierbei ist ein gehärtetes Innenrohr von einem schlagfesten und verschweißbaren Außenrohr ummantelt, wodurch günstige Herstellungskosten mit gleichzeitig hoher Standzeit des hergestellten Rohrkörpers realisierbar sind. Ebenfalls ist es bekannt, die Rohrbunde doppellagig auszuführen, so dass hier ebenfalls ein gehärtetes Innenteil des Rohrbundes von einem schlagfesten und verschweißbaren Außenteil des Rohrbundes umschlossen ist.

Dennoch sind die Förderrohre bedingt durch den zu transportierenden Feststoff auch bei der durch die doppellagigen Rohrkörper eingesetzten erhöhten Standzeit einem Verschleiß ausgesetzt, so dass es durch den abrasiven Verschleiß zu einer Wanddickenverringerung des Innenrohres kommt. Aufgrund des hohen Betriebsdrucks von bis zu mehr als 80 bar kann es somit sein, dass die Wanddicke derart verschleißt, dass ein Rohrkörper berstet oder aber platzt und hierdurch das zu transportierende Medium austritt.

Hierzu werden die Förderrohre nach einer zu erreichenden Standfestigkeit, die beispielsweise aus gefördertem Medium sowie der Betriebsstunden errechnet werden kann, vorsorglich ausgetauscht, um Rohrplatzer zu vermeiden.

Dabei handelt es sich jedoch mitunter nur um grobe Schätzungen, die zusätzliche Sicherheitsfaktoren beinhalten, was unter Umständen dazu führt, dass Rohrkörper viel zu früh ausgetauscht werden. Der Rohrköper selber könnte beispielsweise noch einer längeren Nutzung unterzogen werden.

Damit ein individueller Verschleiß an einem Rohrkörper festgestellt werden kann, ist beispielsweise aus der WO 2007/048385 A1 ein Förderrohr mit einer Verschleißanzeige bekannt. Sofern die Innenmantelfläche in ihrer Wanddicke durch den abrasiven Verschleiß verringert ist, tritt zumindest ein Teilstrom des zu transportierenden Mediums aus und signalisiert somit optisch, dass der Verschleißzustand des Förderrohrs bzw. des Rohrkörpers erreicht ist und ein Austausch dessen erforderlich gemacht ist.

Ferner ist aus der DE 198 21 637 A1 eine Förderrohranordnung mit Verschleißanzeige bekannt. Hierbei wird ein Ringsegment auf die Außenmantelfläche des Förderrohrs aufgebracht und mit einem Drucksensor versehen, wobei ein Außenrohr des doppellagigen Förderrohrs eine Vertiefung aufweist. Ist der Verschleißzustand des Innenrohrs erreicht, dringt Medium an den Sensor und signalisiert so den Verschleißzustand. Ferner ist aus der EP 1 384 694 A1 ein Umlenktopf zum Einbau in Förderanlagen bekannt. In dem Umlenktopf ist ausgangsseitig ein Verschleißring eingesetzt, wobei optional an dem Verschleißring eine Verschleißanzeige anschließbar ist, wobei die Verschleißanzeige an eine Detektionseinheit gekoppelt ist und mittels Überdruck gefüllt ist. Ist der Verschleißzustand erreicht, fällt der Überdruck ab und signalisiert so das Erreichen des Verschleißzustandes für den Umlenktopf.

Aufgabe der vorliegenden Erfindung ist es somit, ausgehend vom Stand der Technik eine Förderrohranordnung bereit zu stellen, die eine individuelle Verschleißanzeige für ein Förderrohr aufweist, wobei die Verschleißanzeige gegenüber aus dem Stand der Technik bekannten Verschleißanzeigen verbessert ist und insbesondere für doppelwandige Rohrkörper einsetzbar ist.

Die zuvor genannte Aufgabe wird erfindungsgemäß mit einer Förderrohranordnung für den Feststofftransport gemäß den Merkmalen im Patentanspruch 1 gelöst.

Vorteilhafte Ausführungsvarianten der vorliegenden Erfindung sind Gegenstand der abhängigen Patentansprüche.

Die erfindungsgemäße Förderrohranordnung für den Feststofftransport weist einen doppelwandigen Rohrkörper auf, wobei an mindestens einem Ende des Rohrkörpers ein Rohrbund gekoppelt ist. Der Rohrkörper kann dabei in einer ersten Ausführungsvariante zumindest abschnittsweise in den Rohrbund eingesteckt sein. Alternativ dazu ist es möglich, den Rohrbund stumpf an den Rohrkörper anzuschweißen, ohne dass das Rohr in den Rohrbund eingesteckt ist. Erfindungsgemäß ist die Förderrohranordnung dadurch gekennzeichnet, dass in dem Rohrbund eine umlaufende Nut ausgebildet ist und in der Nut ein Verschleißring eingesetzt ist, wobei auf der Rückseite des Verschleißrings eine die Wandung des Rohrbundes durchgreifende Öffnung angeordnet ist. Die Rückseite des Verschleißrings ist dabei dessen Außenseite bzw. Außenmantelfläche.

Der Rohrkörper ist im Falle des zumindest abschnittsweisen Einsteckens in den Rohrbund somit zumindest abschnittsweise radial auf seiner Außenmantelfläche von dem Rohrbund umgriffen. In dem Rohrbund selber ist eine umlaufende Nut ausgebildet, wobei in der Nut mindestens eine Öffnung, insbesondere eine Bohrung, ganz besonders bevorzugt umlaufend in einem Abstand zueinander verteilt mehrere Öffnungen angeordnet sind. Durch die Öffnungen kann ein durch die erfindungsgemäße Förderrohranordnung gefördertes Medium zumindest teilweise austreten und somit einen erreichten Verschleißzustand signalisieren. Damit zunächst der Verschleiß gemessen werden kann, ist in der Nut ein Verschleißring angeordnet, der einen Teil der Innenmantelfläche der Förderrohranordnung ausbildet. Wird nun die erfindungsgemäße Förderrohranordnung benutzt und erfolgt ein abrasiver Verschleiß an der Innenmantelfläche der Förderrohranordnung, so verschleißt der Verschleißring selbst mit. Ist die Wandstärke des Verschleißrings derart reduziert, dass ein Medium nicht mehr durch den Verschleißring an einem Austritt durch die Öffnung gehindert wird, mithin der Verschleißring zumindest teilweise vollständig verschlissen ist oder aber eine Restwandstärke des Verschleißrings durch den Förderdruck innerhalb der Förderrohranordnung berstet oder aber platzt, so tritt ein Teilstrom des zu fördernden Mediums durch die Öffnung an die Umgebung aus und signalisiert somit optisch das Erreichen einer Verschleißgrenze der erfindungsgemäßen Förderrohranordnung. Der Verschleißring wird somit genutzt, um ohne aufwendige externe Messmittel oder aber eine Demontage des Rohrstrangs feststellen zu können, in welchem Verschleißzustand sich die Innenlage des doppelwandigen Rohrkörpers befindet.

Der Rohrbund ist in einer vorteilhaften Ausgestaltungsvariante der Erfindung selbst ebenfalls doppellagig ausgebildet. Insbesondere ist der Rohrbund mit dem Ende des Rohrkörpers gefügt, ganz besonders bevorzugt über eine kraftschlüssige und/oder formschlüssige und/oder stoffschlüssige Verbindung, wobei in einer bevorzugten Ausführungsvariante der Rohrbund mit dem Rohrkörper verschweißt ist.

Besonders bevorzugt ist das Ende des Rohrkörpers zumindest teilweise in den Rohrbund eingesteckt und von dem Rohrbund außenseitig radial umlaufend umgriffen. Hierbei kann zwischen Außenmantelfläche des Rohrkörpers sowie Innenmantelfläche des Rohrbundes bzw. der Innenmantelfläche der Aufnahme des Rohrbundes ein formschlüssiges Umgreifen erfolgen, der Rohrkörper kann jedoch auch im Rahmen der Erfindung in den Rohrbund eingepresst sein. Hierdurch entsteht dann nicht nur ein formschlüssiges Umgreifen, sondern auch ein kraftschlüssiger Presssitz zwischen Außenmantelfläche des Rohrkörpers sowie Innenmantelfläche des Rohrbundes. Im Rahmen der Erfindung ist es dann ebenfalls möglich, dass die Außenmantelfläche des Rohrkörpers mit der Innenmantelfläche der Aufnahme des Rohrbundes verklebt wird. Hier kann insbesondere eine Verklebung mit einem anaerob aushärtenden Klebstoff eingesetzt werden. Weiterhin ist es jedoch auch möglich, dass das in den Rohrbund eingesteckte Ende des Rohrkörpers zusätzlich thermisch gefügt ist. Insbesondere wird eine Kehlnaht an einem Ende des Rohrbundes und der Außenmantelfläche des Rohrkörpers radial umlaufend ausgebildet.

Weiterhin bevorzugt ist der Verschleißring in die Nut selbst eingeklebt, insbesondere mit einem anaerob aushärtenden Klebstoff, besonders bevorzugt ist der Verschleißring mit einem fluiddichten Klebstoff in der Nut eingeklebt. An den zwei Stirnseiten des radial umlaufenden Verschleißrings ist jeweils ein Spalt zwischen Stirnseite und Nut vorhanden, wobei durch den Spalt aufgrund von Betriebsdrücken von insbesondere mehr als 80 bar, zumindest ein Teilstrom, insbesondere die flüssige Phase des zu fördernden Mediums dringen kann. Damit nunmehr kein Fluid in den Spalt eindringt, ist der Verschleißring in der Nut selbst fluiddicht eingeklebt.

Insbesondere wird hier ein Klebstoff verwendet, der den Verschleißring stirnseitig, aber auch an der außenliegenden Seite und in der Rückseite des Verschleißrings fluiddicht mit dem Rohrkörper und/oder dem Rohrbund koppelt. Da unter Umständen die verklebten Flächen von der Atmosphäre abgeschnitten sind, kommt hier insbesondere ein anaerob aushärtender Klebstoff zum Einsatz. Der Klebstoff ist insbesondere dahingehend ausgewählt, dass sowohl der Rohrköper als auch der Rohrbund, insbesondere die Innenlage, aus einem metallischen Werkstoff, bevorzugt aus einem gehärteten bzw. vergüteten metallischen bzw. Stahlwerkstoff ausgebildet sind.

Im Rahmen der Erfindung ist es in einer Alternative jedoch auch möglich, die Stirnseiten des Verschleißrings mit den Seitenkanten der Nut radial umlaufend zu verschweißen. Beispielsweise kann hier ein Schweißroboter in Form eines Mulches eingesetzt werden.

In einer alternativen bevorzugten Ausführungsvariante ist der Verschleißring nicht als separates Bauteil ausgebildet, sondern einstückig und werkstoffeinheitlich an einem Innenring des Rohrbundes ausgebildet. Mithin erstreckt sich der Verschleißring als einstückiger Fortsatz des Innenringes des Rohrbundes in die Richtung des Rohrkörpers. Die Innenmantelfläche des Rohrbundes ist dabei insbesondere glatt durchgehend ausgebildet, wobei die Außenmantelfläche im Bereich des Verschleißringes verringert ist, beispielsweise durch einen spanabhebenden Vorgang. Auch bei dieser Ausführungsvariante ist dann eine Bohrung durch den Außenring derart ausgeführt, dass die Bohrung den Außenring durchgreift. Die Bohrung erstreckt sich dabei bis an die Außenmantelfläche des Verschleißringes, wobei insbesondere bei einer Sacklochbohrung eine Spitze der Bohrung die Außenmantelfläche des Verschleißringes leicht anbohrt. Erreicht der Verschleißring eine Verschleißgrenze, ist dieser also derart stark abgenutzt, dass seine Wandstärke nahezu abgetragen ist, so erreicht das durch die Förderrohranordnung fließende Medium die Spitze der Bohrung und tritt über die Bohrung aus der Förderrohranordnung aus. Es wird somit signalisiert, dass die Verschleißgrenze erreicht ist, wobei der Fördervorgang zunächst noch beendet werden kann. In diesem Falle wird dann das Innenrohr des Rohrbundes in das Außenrohr eingesteckt. Das Innenrohr kann darüber hinaus in dem Außenrohr verklebt werden und/oder mit dem Außenrohr stoffschlüssig gefügt werden. Darüber hinaus ist es im Rahmen der Erfindung möglich, dass zwischen Innenrohr und Außenrohr eine Passung ausgebildet ist, beispielsweise eine Presspassung. Der doppelwandige Rohrkörper kann dann wiederum in den Rohrbund zumindest abschnittsweise formschlüssig eingeschoben sein und mit dem Rohrbund selbst stoffschlüssig gekoppelt sein.

Insbesondere ist die Innenmantelfläche des Verschleißrings plan mit der Innenmantelfläche des Rohrbundes und/oder der Innenmantelfläche des Rohrkörpers abschließend ausgebildet. Hierdurch kommt es zu keinen oder aber in zu vernachlässigender Weise entstehenden Verwirbelungen während des Feststofftransports. Bei laminarer Strömung erfolgt somit keine Turbulenzerzeugung durch den Übergang von Innenmantelfläche des Rohrbundes auf Innenmantelfläche des Verschleißrings und/oder von Innenmantelfläche des Verschleißrings auf Innenmantelfläche des Rohrkörpers.

Weiterhin bevorzugt ist die Nut derart im Rohrbund platziert, dass sie an dem rohrkörperseitigen Ende des Rohrbundes angeordnet ist, wobei die Nut auf der Rohrbundseite von der Innenlage des Rohrbundes berandet ist und auf der Rohrkörperseite von der Stirnseite des Rohrkörpers berandet ist. Hierdurch wird es ermöglicht, dass die erfindungsgemäße Förderrohranordnung in besonders einfacher Weise zusammengesetzt wird. Zunächst werden Rohrbund, Verschleißring und Rohrkörper voneinander getrennt gefertigt und hergestellt. Sodann wird der Verschleißring in die Nut in dem Rohrbund eingesetzt und anschließend der Rohrkörper in den Rohrbund eingeführt, so dass eine Stirnseite des Rohrkörpers mit der Stirnseite des Verschleißringes zumindest abschnittsweise mit der Stirnseite des Verschleißrings zur Anlage kommt und somit den Verschleißring in dem Rohrbund einschließt. Dann kann optional der Rohrbund mit dem Rohrkörper verklebt und/oder verpresst und/oder verschweißt werden. Der Verschleißring selbst kann dabei wiederum verklebt werden, wobei insbesondere ein Klebstoff in die Nut einbringbar ist und sodann der Verschleißring in die Nut einsetzbar ist oder aber zunächst auf den Verschleißring aufgebracht werden kann, wobei dann der Verschleißring mit dem Klebstoff in die Nut eingebracht werden kann. Alternativ ist es jedoch auch möglich, die Nut in dem Rohrbund derart auszubilden, dass der Rohrbund und der Rohrkörper stumpf aneinander geschweißt werden, mithin der Rohrkörper nicht in den Rohrbund eingesetzt wird. Die Nut ist dann innerhalb des Rohrbundes ausgebildet oder aber alternativ auch innerhalb des Rohrkörpers ausgebildet und wird einseitig von dem Rohrbund oder dem Rohrkörper begrenzt sowie aufgrund des stumpfen Aneinandersetzens von dem jeweils stumpf gekoppelten Bauelement.

Weiterhin bevorzugt entspricht die Wandstärke des Verschleißrings der Wandstärke der Innenlage des Rohrbundes und/oder der Wandstärke der Innenlage des Rohrkörpers. Im Rahmen der Erfindung ist es jedoch auch möglich, dass die Wandstärke des Verschleißrings kleiner gewählt ist als die Wandstärke der Innenlage des Rohrbundes und/oder die Wandstärke der Innenlage des Rohrkörpers. Hierdurch ist es sichergestellt, dass zunächst der Verschleißring aufgrund der geringeren Wandstärke verschleißt und dann durch ein zumindest teilweise austretendes zu förderndes Mediums optisch signalisiert wird, dass die Verschleißgrenze der Innenlage des Rohrbundes und/oder die Verschleißgrenze der Innenlage des Rohrkörpers in Kürze erreicht wird. Die Dimensionierung der Wandstärke des Verschleißrings hängt jedoch von der Wahl des Werkstoffs des Verschleißrings ab.

Ist der Verschleißring aus dem gleichen Werkstoff ausgebildet wie die Innenlage des Rohrbundes und/oder die Innenlage des Rohrkörpers, so ist bevorzugt eine identische Wandstärke zu den zuvor genannten Innenlagen zu wählen oder aber eine geringfügig verringerte Wandstärke, so dass entweder bei Verschleiß des Verschleißrings auch ein Verschleiß der Innenlagen angezeigt wird oder aber zunächst der Verschleißring in seiner Wandstärke derart verschlissen ist, dass Medium austritt und somit ein Rückschluss auf die kurz bevorstehende Verschleißgrenze der Innenlagen von Rohrbund und/oder Rohrkörper signalisiert ist.

Im Rahmen der Erfindung ist es jedoch auch möglich, den Verschleißring aus einem Werkstoff auszubilden, der gegenüber dem Werkstoff der Innenlage des Rohrbundes und/oder der Innenlage des Rohrkörpers eine geringere Härte und/oder eine geringere Festigkeit aufweist. Im Rahmen der Erfindung ist es ebenfalls möglich, den Verschleißring aus einem festeren Werkstoff auszubilden, gegenüber der Innenlage des Rohrbundes und/oder der Innenlage des Rohrkörpers. Hierdurch wird einem möglichen lokal auftretenden höheren Verschleiß im Bereich des Verschleißrings entgegengewirkt. Im Rahmen der Erfindung ist es jedoch ebenfalls möglich, dass der Verschleißring aus einem gegenüber der Innenlage des Rohrbundes und/oder der Innenlage des Rohrkörpers weicheren Werkstoff ausgebildet ist. Ebenfalls ist es vorstellbar, dass bei gleichem Werkstoff von Verschleißring und Innenlagen, den Verschleißring geringwertiger oder aber höherwertiger zu vergüten. Die zuvor genannten Parameter sind davon abhängig zu wählen, dass der Verschleiß des Verschleißringes schneller erfolgt, als der Verschleiß der Innenlagen.

Im Rahmen der Erfindung kann der Verschleißring weiterhin besonders bevorzugt aus einem hochverschleißfesten Gusswerkstoff ausgebildet sein.

Im Rahmen der Erfindung ist es in einer weiteren bevorzugten Ausführungsvariante vorstellbar, dass der Verschleißring nicht als externes separates Bauteil zunächst hergestellt wird und dann in den Rohrbund eingesetzt wird, sondern dass die in dem Rohrbund vorhandene Nut und/oder ein in dem Rohrbund vorhandener Bereich an der Innenmantelfläche mittels eines stoffschlüssigen Verfahrens derart ausgebildet wird, dass es dem Verschleißring entspricht. Insbesondere wird der Verschleißring in der Nut in dem Rohrbund durch Aufpanzern hergestellt. Mithin wird eine Schicht und/oder mehrere Schichten in die Nut eingebracht, so dass durch die Schichten der Verschleißring ausgebildet wird. Alternativ ist es dazu auch möglich, dass der Bereich der Nut durch Einsatzhärten als Verschleißring ausgebildet wird. Alternativ kann auch ein Borieren, Nitrieren oder Carbonitrieren durchgeführt werden. Der Außenring wird dann besonders bevorzugt wiederum von mindestens einer Bohrung durchgriffen, wobei die Bohrung, insbesondere die Spitze der Bohrung, sich bis in die Verschleißschicht in Radialrichtung nach innen erstreckt. Sind die Verschleißschicht bzw. der Verschleißring derart verschlissen, dass eine kritische Verschleißgrenze erreicht ist, tritt gefördertes Medium über die Bohrung an die Außenmantelfläche des Rohrbundes und signalisiert das Erreichen des Verschleißzustandes. Der Fördervorgang kann jetzt jedoch mindestens beendet werden und/oder die Feststoffförderrohranordnung kann noch für einen bestimmten Betriebsstundensatz weiter genutzt werden, bevor diese erneuert werden muss.

Hierdurch wird wiederum durch die Wahl des Werkstoffs des Verschleißrings sichergestellt, dass zunächst der Verschleißring verschleißt, bevor die Innenlagen von Rohrbund und/oder Rohrkörper verschleißen. Insbesondere wird der Verschleißring aus einem Stahlwerkstoff ausgebildet. Im Rahmen der Erfindung ist es bevorzugt vorstellbar, dass der Verschleißring aus dem gleichen Werkstoff ausgebildet ist, aus dem die Innenlage des Rohrbundes und/oder die Innenlage des Rohrkörpers ausgebildet ist, wobei es sich hierbei bevorzugt um einen härtbaren oder aber vergütbaren Stahlwerkstoff handelt. Der Verschleißring wird jedoch in bevorzugter Variante gehärtet bzw. vergütet eingesetzt, wobei die Innenlage von Rohrbund und/oder die Innenlage des Rohrkörpers gehärtet bzw. vergütet sind. Auch durch diese Maßnahme wird wiederum sichergestellt, dass ein eventuell in dem Bereich des Verschleißrings auftretender lokal höherer Verschleiß zu einem gleichmäßigen Reduzieren der Wandstärke von Verschleißring sowie Innenlage von Rohrbund und/oder Innenlage des Rohrkörpers führt.

Im Rahmen der Erfindung ist weiterhin besonders bevorzugt innerhalb der Nut selber eine die Nut umgreifende Ringnut ausgebildet, wobei die Ringnut insbesondere radial umlaufend ausgebildet ist und fluidleitend mit der mindestens einen Öffnung verbunden ist. Durch diese Maßnahme wird sichergestellt, dass bei einem örtlichen verschieden belasteten Verschleißring, beispielsweise ist dieser in einen oberen Teil und einen unteren Teil eingeteilt, wobei die Öffnung im oberen Teil angeordnet ist und der erhöhte Verschleiß im unteren Teil auftritt, sichergestellt, dass ein im unteren Teil durch den Verschleißring hindurchtretendes Fluid die Ringnut ausfüllt und sodann über die Ringnut auf der Oberseite durch die Öffnung austritt. Bevorzugt sind jedoch radial umlaufend abschnittsweise mehrere Öffnungen angeordnet. Im Falle des Berstens oder aber des zumindest örtlich vollständigen Verschleißes des Verschleißrings kann jedoch nicht prognostiziert werden, an welcher Stelle das Medium durch den Verschleißring hindurchtritt. Durch die Ringnut wird wiederum sichergestellt, dass bei erstem Auftreten des Verschleißes an dem Verschleißring sich die Ringnut mit dem Medium füllt und sodann wiederum das Medium über die Ringnut durch die Öffnung austritt und damit einem anwendenden Monteur signalisiert, dass die bevorstehende Verschleißgrenze der Förderrohranordnung bald erreicht ist.

Im Rahmen der Erfindung ist in einer weiteren bevorzugten Ausführungsvariante die umlaufende Ringnut alternativ und/oder ergänzend zu der vorbeschriebenen Variante auch an der Rückseite des Verschleißrings selber ausbildbar. Die Ringnut ist somit nicht im Rohrbund und/oder dem Rohrkörper ausgebildet, sondern in dem Verschleißring selber. Im Rahmen der Erfindung können in Axialrichtung auch mehrere Ringnuten nebeneinander platziert sein.

Im Rahmen der Erfindung kann dann wiederum beispielsweise durch ein Aufsetzen einer außenseitigen Manschette zunächst der Betriebsdruck gehalten werden und beispielsweise der Fördervorgang beendet werden, wobei erst danach ein zumindest teilweises Austauschen der Förderrohranordnung erfolgt. Bei der Manschette kann es sich beispielsweise um eine Metallmanschette mit einem Innendichtring handeln, der die Öffnung außenseitig verschließt. Sowohl die Nut als auch die Öffnung und im Falle der Anwendung einer Ringnut sind diese dann mit Fluid befüllt, es tritt jedoch kein weiteres Fluid an die Umgebung aus und durch das Aufsetzen der Manschette wird signalisiert, dass der entsprechende Rohrkörper die Verschleißgrenze erreicht hat oder aber bald erreichen wird und in der Folge ausgetauscht werden muss. Ein sofortiges Unterbrechen oder aber Abbrechen des Fördervorgangs wird jedoch vermieden.

Im Rahmen der Erfindung ist es weiterhin vorstellbar, dass beispielsweise ein Signalstoff in der Öffnung oder aber in der Ringnut platziert wird, beispielsweise ein Farbstoff, der aufgrund des in der Förderrohranordnung herrschenden Förderdrucks austretenden Mediums ebenfalls aus der Ringnut bzw. aus der Öffnung herausgedrückt wird und dann beispielsweise durch eine Signalfarbe einem anwendenden Monteur deutlich signalisiert, dass die Verschleißgrenze bald erreicht ist. Im Rahmen der Erfindung ist es ebenfalls möglich, den Signalstoff beispielsweise als chemischen Stoff derart zu wählen, dass er mit der Oberfläche und/oder mit der Oberfläche der Förderrohranordnung und/oder mit dem austretenden Medium reagiert und beispielsweise hierdurch eine farbliche Ausgestaltung in Form einer Warnfarbe oder aber einer signalisierenden Farbe hervorgerufen wird. Hierdurch wird wiederum sichergestellt, dass nicht durch eine von außen verschmutzte Förderrohranordnung das Bevorstehen der Verschleißgrenze zumindest für einen gewissen Zeitraum übersehen wird.

Weitere Vorteile, Merkmale, Eigenschaften und Aspekte der vorliegenden Erfindung sind Bestandteil der nachfolgenden Beschreibung. Bevorzugte Ausführungsvarianten werden in der schematischen Figur dargestellt. Diese dient dem einfacheren Verständnis der Erfindung.

Weitere Vorteile, Merkmale, Eigenschaften und Aspekte der vorliegenden Erfindung werden in den schematischen Figuren dargestellt. Diese dienen dem einfachen Verständnis der Erfindung. Es zeigen:
- Figur 1: ein Ende der Förderrohranordnung mit einem Rohrkörper, einem Rohrbund und dazwischen eingesetztem Verschleißring;
- Figur 2: eine alternative Ausführungsvariante mit einstückig und werkstoffeinheitlich ausgebildetem Verschleißring,
- Figur 3: eine alternative Ausführungsvariante mit aufgepanzertem Verschleißring,
- Figur 4: ein am rohrbundseitigen Ende der Förderrohranordnung eingesetzten Verschleißring und
- Figur 5: eine alternative Ausführungsvariante gemäß Figur 4.

In den Figuren werden für gleiche oder ähnliche Bauteile dieselben Bezugszeichen verwendet, auch wenn eine wiederholte Beschreibung aus Vereinfachungsgründen entfällt.

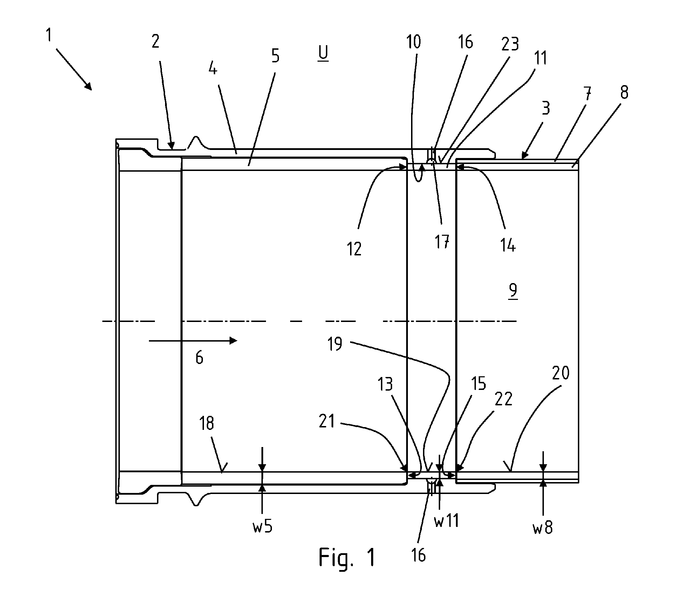

Figur 1 zeigt eine erfindungsgemäße Förderrohranordnung 1 aufweisend einen doppellagigen Rohrbund 2 sowie einen doppellagigen Rohrkörper 3. Der Rohrbund 2 weist dabei eine Außenlage 4 sowie eine Innenlage 5 auf, wobei die Innenlage 5 von der Außenlage 4 radial umgriffen ist. Die Innenlage 5 des Rohrbundes 2 selbst ist in Längsrichtung 6 des Rohrbundes 2 kürzer ausgebildet als die Außenlage 4. Ebenfalls der Rohrkörper 3 ist doppellagig mit einer Außenlage 7 und einer Innenlage 8 ausgebildet, wobei die Innenlage 8 außenseitig vollständig von der Außenlage 7 des Rohrkörpers 3 umgriffen ist. Im Rahmen der Erfindung ist es jedoch ebenfalls möglich, dass die Innenlage und die Außenlage des Rohrbundes gleichlang ausgebildet sind und der Verschleißring in den Rohrkörper eingesetzt ist. Ebenfalls wäre es im Rahmen der Erfindung vorstellbar, dass ein komplettes Verschleißrohrstück zwischen Rohrbund und Rohrkörper stumpf geschweißt wird, wobei dann der Verschleißring in das nicht näher dargestellte Verschleißrohrstück eingesetzt ist.

In Längsrichtung 6 sind die Innenlage 7 und die Außenlage 8 des Rohrkörpers 3 gleich lang ausgebildet. An einem rohrkörperseitigen Ende 9 des Rohrbundes 2 ist erfindungsgemäß eine Nut 10 ausgebildet, wobei innerhalb der Nut 10 ein Verschleißring 11 eingesetzt ist. Der Verschleißring 11 ist von der Stirnseite 13 der Innenlage 5 des Rohrbundes 2 berandet. Dies bildet auch gleichsam die rohrbundseitige Berandung der erfindungsgemäßen Nut 10 und der Verschleißring 11 kommt mit seiner rohrbundseitigen Stirnfläche 12 hier zur Anlage. An dem rohrkörperseitigen Ende 9 ist die rohrkörperseitige Stirnfläche 14 des Verschleißrings 11 von der Stirnseite 15 des Rohrkörpers 3 berandet. Die Stirnseite 15 des Rohrkörpers 3 bildet gleichzeitig den rohrkörperseitigen Randbereich der Nut 10 aus.

Hier dargestellt weist der Verschleißring 11 selbst eine Wandstärke w11 auf, die der Wandstärke w8 der Innenlage 8 des Rohrkörpers 3 im Wesentlichen entspricht. Die Wandstärke w5 der Innenlage 5 des Rohrbundes 2 ist größer ausgebildet.

Ferner dargestellt sind an gegenüberliegenden Seiten erfindungsgemäße Öffnungen 16, wobei die Öffnungen 16 mit einer radial die erfindungsgemäße Nut 10 umlaufenden Ringnut 17 fluidleitend in Verbindung stehen. Ist somit der Verschleißring 11 verschlissen, tritt nicht näher dargestelltes Fluid über den verschlissenen Verschleißring 11 in die Ringnut 17 ein, verteilt sich in der Ringnut 17 und bei zumindest teilweisem Ausfüllen der Ringnut 17 tritt dann das Fluid durch mindestens eine Öffnung 16 an die Umgebung aus.

Ferner dargestellt ist, dass die Innenmantelfläche 18 des Rohrbundes 2, die Innenmantelfläche 19 des Verschleißrings 11 sowie die Innenmantelfläche 20 des Rohrkörpers 3 in Längsrichtung 6 im Wesentlichen plan ineinander übergehen. Hierdurch entstehen an den Innenmantelflächen 18, 19, 20 durch die zwischen Rohrbund 2 und Verschleißring 11 sowie zwischen Verschleißring 11 und Rohrkörper 3 entstehenden Spalte 21, 22 im Wesentlichen keine Turbulenzen. Erfindungsgemäß sind die Spalte 21, 22 selber mit Klebstoff oder aber Dichtmittel ausgefüllt, so dass kein Fluid in den Spalt 21, 22 oder gar auf die Rückseite 23 des Verschleißrings 11 dringen kann.

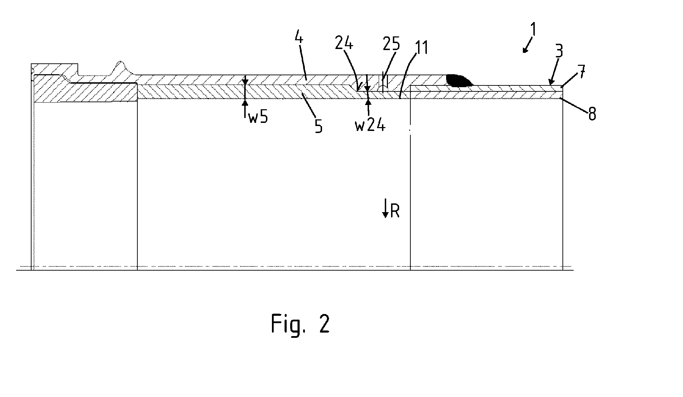

Figur 2 zeigt eine alternative Ausführungsvariante zu Figur 1. Die dargestellte Förderrohranordnung 1 weist einen Rohrkörper 3 mit Außenlage 4 und Innenlage 5 auf. Im Unterschied zu der Ausführungsvariante gemäß Figur 1 ist hier jedoch der Verschleißring 11 selbst nicht als separates Bauteil ausgebildet, sondern werkstoffeinheitlich und einstückig als Verlängerung der Innenlage 5 des Rohrbundes 2 ausgebildet. Hierzu ist eine Außenmantelfläche 24 der Innenlage 5 im Bereich des Verschleißringes 11 beispielsweise spanabhebend bearbeitet, so dass im Bereich des Verschleißringes 11 eine Wandstärke w24 ausgebildet ist, die gegenüber der Wandstärke w5 reduziert ist. Die Außenlage 4 des Rohrbundes 2 selbst ist von einer Bohrung 25 durchgriffen, wobei sich die Bohrung 25 mindestens bis an die Außenmantelfläche 24 der Innenlage 5 erstreckt. Bevorzugt ist die Bohrung 25 in die Außenmantelfläche 24 der Innenlage 5 eindringend ausgebildet, beispielsweise bei einer nicht näher dargestellten Sacklochbohrung mit der Spitze in die Außenmantelfläche 24 der Innenlage 5 eindringend. Ist der Verschleißring 11 bzw. die Wandstärke w24 im Bereich des Verschleißringes 11 weitestgehend abgetragen, so würde ein durch die Feststoffförderrohranordnung 1 gefördertes Medium über die Bohrung 25 nach außen austreten und das Erreichen des Verschleißzustandes signalisieren.

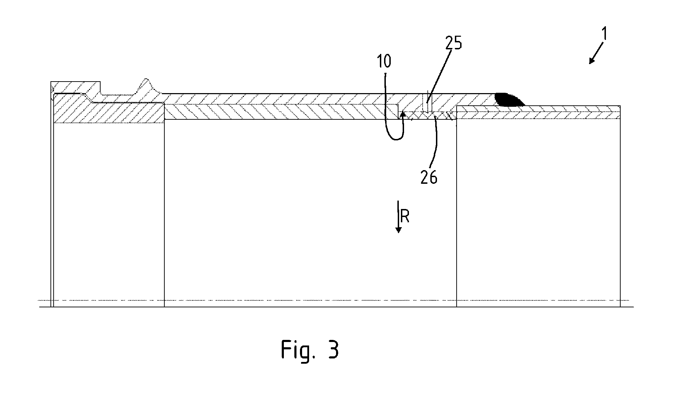

Figur 3 zeigt eine alternative Ausführungsvariante, wobei hier der im Unterschied zu der in Figur 1 gezeigten Ausführungsvariante der Verschleißring 11 selber als zumindest einlagige Schicht 26 in die Nut 10 des Rohrbundes 2 aufgepanzert ist. Eine durch die Außenlage 4 des Rohbundes 2 durchgreifende Bohrung 25 ist bis in die aufgepanzerte Schicht 26 in Radialrichtung hineinragend ausgebildet. Ist auch hier die aufgepanzerte Schicht 26 durch Verschleiß abgetragen, so würde ein durch die Feststoffförderrohranordnung 1 geführtes Medium über die Bohrung 25 an die Außenfläche austreten und so ein Erreichen einer Verschleißgrenze signalisieren.

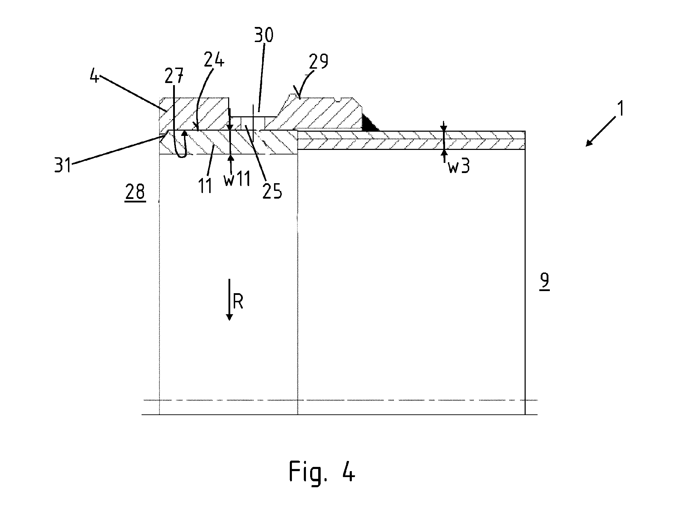

Figur 4 zeigt eine alternative Ausführungsvariante, wobei hier eine Nut 27 auf einem rohrbundseitigen Ende 28 ausgebildet ist. In die Nut 10 eingesetzt ist ein Verschleißring 11, wobei der Verschleißring 11 gemäß der Ausführung in Figur 4 eine größere Wandstärke w4 aufweist, gegenüber der Wandstärke w3 des Rohrkörpers 3. Ferner ist an einer Außenmantelfläche 29 des Rohrbundes 2 selber eine umlaufende Nut 30 ausgebildet, wobei in der Nut 30 selbst wiederum eine Bohrung 25 angeordnet ist, die sich in Radialrichtung R mindestens bis zu der Außenmantelfläche des Verschleißringes 11 erstreckt. Insbesondere greift die Bohrung 25 zumindest minimal in die Außenmantelfläche 24 des Verschleißringes 11 ein. Ist auch hier die Wandstärke w11 des Verschleißringes 11 gemäß der Ausführungsvariante von Figur 4 weitestgehend abgetragen, so tritt durch die Feststoffförderrohranordnung 1 transportiertes Medium über die Bohrung 25 an die Außenfläche aus. Bevorzugt wird der gemäß Figur 4 gezeigte Verschleißring 11 aus gehärtetem Stahl in den Rohrbund 2 bzw. die hier dargestellte Außenlage 4 des Rohrbundes 2 eingesetzt und weiterhin besonders bevorzugt eingeklebt.

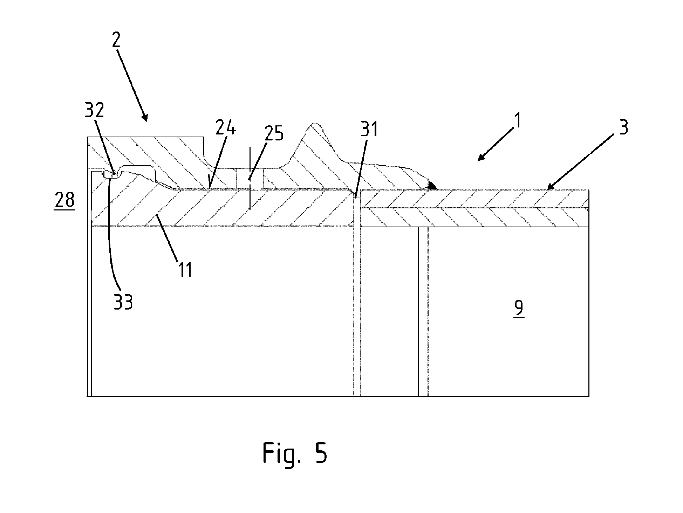

Figur 5 zeigt eine weitere alternative Ausführungsvariante einer erfindungsgemäßen Feststoffförderrohranordnung 1, wobei hier ebenfalls der Verschleißring 11 an einem rohrbundseitigen Ende 28 des Rohrbundes 3 angeordnet ist. Gemäß der Ausführung der Figur 4 wird der Verschleißring 11 von dem rohrkörperseitigen Ende 9 des Rohrbundes 2 aus eingeschoben und von einem nach in Radialrichtung nach innen zeigenden Vorsprung 31 formschlüssig gehalten.

Gemäß der Ausführungsvariante von Figur 5 wird der Verschleißring 11 in den Rohrbund 2 von einem rohrbundseitigen Ende 28 aus eingeschoben und hier wiederum von einem Vorsprung 31 an einem Durchrutschen auf das rohrkörperseitige Ende 9 gehindert. Am rohrbundseitigen Ende 28 ist jedoch noch eine Rastnase 32 ausgebildet, die mit einer Rastnut 33 im formschlüssigen Eingriff eine Schnappverbindung ausbildet. Im Rahmen der Erfindung wird somit eine leichte Montage des Rohrbundes 2 realisiert. Es ist hierbei sogar denkbar, den Verschleißring 11 auswechselbar auszugestalten. Auch bei der Ausführungsvariante gemäß Figur 5 durchgreift wiederum eine Außenlage 4 des Rohrbundes 2 und erstreckt sich bevorzugt bis in die Außenmantelfläche 24 des Verschleißringes 11.

### Bezugszeichen:

1 - Förderrohranordnung
2 - Rohrbund
3 - Rohrkörper
4 - Außenlage zu 2
5 - Innenlage zu 2
6 - Längsrichtung
7 - Außenlage zu 3
8 - Innenlage zu 3
9 - rohrkörperseitiges Ende zu 2
10- Nut
11 - Verschleißring
12 - rohrbundseitige Stirnfläche zu 11
13 - Stirnseite zu 5
14 - rohrkörperseitige Stirnfläche zu 11
15 - Stirnseite zu 3
16- Öffnung
17- Ringnut
18 - Innenmantelfläche zu 2
19 - Innenmantelfläche zu 11
20 - Innenmantelfläche zu 3
21 - Spalt zwischen 2 und 11
22 - Spalt zwischen 3 und 11
23 - Rückseite zu 11
24 - Außenmantelfläche zu 5
25 - Bohrung
26 - Schicht
27- Nut
28 - rohrbundseitiges Ende
29 - Außenmantelfläche zu 2
30- Nut
31 - Vorsprung
32 - Rastnase
33 - Rastnut

R - Radialrichtung
U - Umgebung
w5 - Wandstärke zu 5
w8 - Wandstärke zu 8
w11 - Wandstärke zu 11
w24 -Wandstärke zu 11 bei 24

## Patentansprüche

1. Förderrohranordnung (1) für den Feststofftransport, aufweisend einen doppelwandigen Rohrkörper (3), mit einem an mindestens einem Ende gekoppelten Rohrbund (2), **dadurch gekennzeichnet, dass** in dem Rohrbund (2), eine umlaufende Nut (10) ausgebildet ist und in der Nut (10) ein Verschleißring (11) eingesetzt ist, wobei auf der Rückseite (23) des Verschleißringes (11) eine die Wandung des Rohrbundes (2) durchgreifende Öffnung (16) angeordnet ist.

2. Förderrohranordnung nach Anspruch 1, **dadurch gekennzeichnet, dass** der Rohrbund (2) doppellagig ausgebildet ist.

3. Förderrohranordnung nach Anspruch 1 oder 2, **dadurch gekennzeichnet, dass** der Verschleißring (11) einstückig und werkstoffeinheitlich an einer Innenlage (5) des Rohrbundes (2) ausgebildet ist, insbesondere ist die Innenlage (5) im Bereich des Verschleißringes (11) an seiner Außenmantelfläche (24) abgedreht.

4. Förderrohranordnung nach Anspruch 3, **dadurch gekennzeichnet, dass** eine Außenlage (4) des Rohrbundes (2) eine diesen durchgreifende Bohrung (25) aufweist, wobei eine Spitze der Bohrung (25) sich bis in den Verschleißring (11) erstreckt.

5. Förderrohranordnung nach einem der Ansprüche 1 bis 4, **dadurch gekennzeichnet, dass** der Rohrbund (2) mit dem Ende des Rohrkörpers (3) gefügt ist, insbesondere über eine kraftschlüssige und/oder formschlüssige und/oder stoffschlüssige Verbindung, bevorzugt ist der Rohrbund (2) mit dem Rohrkörper (3) verschweißt.

6. Förderrohranordnung nach einem der Ansprüche 1 bis 5, **dadurch gekennzeichnet, dass** der Verschleißring (11) in die Nut (10) eingeklebt ist, insbesondere mit einem anaerob aushärtenden Klebstoff, besonders bevorzugt ist der Verschleißring (11) mit einem fluiddichten Klebstoff in der Nut (10) eingeklebt.

7. Förderrohranordnung nach einem der vorstehenden Ansprüche, **dadurch gekennzeichnet, dass** die Innenmantelfläche (18) des Verschleißringes (11) plan mit der Innenmantelfläche (18) des Rohrbundes (2) und/oder der Innenmantelfläche (20) des Rohrkörpers (3) abschließt.

8. Förderrohranordnung nach einem der vorstehenden Ansprüche, **dadurch gekennzeichnet, dass** die Nut (10) an einem Rohrkörperseitigen Ende (9) des Rohrbundes (2) angeordnet ist, wobei die Nut (10) auf der Rohrbundseite von der Innenlage (5) des Rohrbundes (2) berandet ist und auf der Rohrkörperseite von der Stirnseite (15) des Rohrkörpers (3) berandet ist.

9. Förderrohranordnung nach einem der vorstehenden Ansprüche, **dadurch gekennzeichnet, dass** der Verschleißring (11) eine Wandstärke (w11) aufweist, die der Wandstärke (w5) der Innenlage (5) des Rohrbundes (2) und/oder der Wandstärke (w8) der Innenlage (8) des Rohrkörpers (3) entspricht.

10. Förderrohranordnung nach einem der vorstehenden Ansprüche, **dadurch gekennzeichnet, dass** der Verschleißring (11) aus dem gleichen Werkstoff ausgebildet ist, wie die Innenlage (5) des Rohrbundes (2) und/oder die Innenlage (8) des Rohrkörpers (3) oder dass der Verschleißring (11) aus einem Werkstoff ausgebildet ist, der gegenüber dem Werkstoff der Innenlage (5) des Rohrbundes (2) und/oder der Innenlage (8) des Rohrkörpers (3) eine höhere Härte und/oder eine höhere Festigkeit aufweist, bevorzugt ist der Verschleißring (11) aus einem hochfesten Gusswerkstoff ausgebildet.

11. Förderrohranordnung nach einem der vorstehenden Ansprüche, **dadurch gekennzeichnet, dass** der Verschleißring (11) durch ein stoffschlüssiges Auftrageverfahren auf die Nut (10) in den Rohrbund (2) aufgebracht ist, insbesondere durch Aufpanzern eines verschleißfesten Werkstoffes oder durch Einsatzhärten oder durch Borieren, Nietrieren oder Carbonitrieren.

12. Förderrohranordnung nach einem der vorstehenden Ansprüche, **dadurch gekennzeichnet, dass** in der Nut (10) eine Ringnut (17) ausgebildet ist, wobei die Ringnut (17) insbesondere radial umlaufend ausgebildet ist und fluidleitend mit der Öffnung (16) verbunden ist und/oder das an der Rückseite des Verschleißringes eine radial umlaufende Ringnut ausgebildet ist.

13. Förderrohranordnung nach einem der Ansprüche 1 bis 9 oder 12, **dadurch gekennzeichnet, dass** der Verschleißring (11) aus einem Werkstoff ausgebildet ist, der gegenüber dem Werkstoff der Innenlage (5) des Rohrbundes (2) und/oder der Innenlage (8) des Rohrkörpers (3) eine geringere Härte und/oder eine geringere Festigkeit aufweist.

14. Förderrohranordnung nach einem der vorstehenden Ansprüche, **dadurch gekennzeichnet, dass** der Verschleißring (11) an einem rohrbundseitigen Ende (28) in dem Rohrbund (2) angeordnet ist und insbesondere die Wandstärke (w11) des Verschleißringes (11) größer ist, als die Wandstärke (w3) des doppelwandigen Rohrkörpers (3).

15. Förderrohranordnung nach einem der vorstehenden Ansprüche, **dadurch gekennzeichnet, dass** der Rohrbund (2) auf einer Außenmantelfläche (24) eine umlaufende Nut (30) aufweist, wobei in der Nut (30) insbesondere eine Bohrung (25) angeordnet ist, wobei sich eine Spitze der Bohrung (25) in Radialrichtung bis in den Verschleißring (11) erstreckt.

## Claims

1. Conveying pipe arrangement (1) for transporting solid materials, comprising a double-wall pipe body (3) having a pipe collar (2) coupled at least at one end, **characterised in that** a circumferential groove (10) is formed in the pipe collar (2) and a wear ring (11) is inserted in the groove (10), an opening (16) which penetrates the wall of the pipe collar (2) being arranged on the rear side (23) of the wear ring (11).

2. Conveying pipe arrangement according to claim 1, **characterised in that** the pipe collar (2) is formed so as to be double-layered.

3. Conveying pipe arrangement according to either claim 1 or claim 2, **characterised in that** the wear ring (11) is integralwith an inner layer (5) of the pipe collar (2) and formed of the same material, in particular the inner layer (5) is faced in the region of the wear ring (11) on the outer surface (24)thereof.

4. Conveying pipe arrangement according to claim 3, **characterised in that** an outer layer (4) of the pipe collar (2) has a drilled hole (25) penetrating said pipe collar, a tip of the drilled hole (25) extending as far as into the wear ring (11).

5. Conveying pipe arrangement according to any of claims 1 to 4, **characterised in that** the pipe collar (2) is joined to the end of the pipe body (3), in particular by a force fitting connection and/or an interlocking connection and/or an integral bond, the pipe collar (2) preferably being welded to the pipe body (3).

6. Conveying pipe arrangement according to any of claims 1 to 5, **characterised in that** the wear ring (11) is glued into the groove (10), in particular using an anaerobically curing adhesive, more preferably the wear ring (11) is glued into the groove (10) using a liquid-tight adhesive.

7. Conveying pipe arrangement according to any of the preceding claims, **characterised in that** the inner surface (18) of the wear ring (11) ends so as to be flush with the inner surface (18) of the pipe collar (2) and/or the inner surface (20) of the pipe body (3).

8. Conveying pipe arrangement according to any of the preceding claims, **characterised in that** the groove (10) is arranged on anend (9), on the pipe body side, of the pipe collar (2), the groove (10) on the pipe collar side being delimited by the inner layer (5) of the pipe collar (2) and being delimited on the pipe body side by the end face (15) of the pipe body (3).

9. Conveying pipe arrangement according to any of the preceding claims, **characterised in that** the wear ring (11) has a wall thickness (w11) which corresponds to the wall thickness (w5) of the inner layer (5) of the pipe collar (2) and/or to the wall thickness (w8) of the inner layer (8) of the pipe body (3).

10. Conveying pipe arrangement according to any of the preceding claims, **characterised in that** the wear ring (11) is formed of the same material as the inner layer (5) of the pipe collar (2) and/or as the inner layer (8) of the pipe body (3), or **in that** the wear ring (11) is formed of a material which is harder and/or strongerthan the material of the inner layer (5) of the pipe collar (2) and/or of the inner layer (8) of the pipe body (3), the wear ring (11) preferably being formed of a high-strength cast material.

11. Conveying pipe arrangement according to any of the preceding claims, **characterised in that** the wear ring (11) is attached to the groove (10) in the pipe collar (2) by being applied using a bonding method, in particular by hard-facing a wear-resistant material or by case hardening or by boronising, nitriding or carbonitriding.

12. Conveying pipe arrangement according to any of the preceding claims, **characterised in that** an annular groove (17) is formed in the groove (10), the annular groove (17) in particular being formed so as to be radially circumferential and being connected to the opening (16) in a fluid conducting manner and/or **in that** a radially circumferential annular groove is formed on the rear side of the wear ring.

13. Conveying pipe arrangement according to any of claims 1 to 9 or 12, **characterised in that** the wear ring (11) is formed of a material which is less hard and/or less strong than the material of the inner layer (5) of the pipe collar (2) and/or of the inner layer (8) of the pipe body (3).

14. Conveying pipe arrangement according to any of the preceding claims, **characterised in that** the wear ring (11) is arranged on an end (28), on the pipe collar side, in the pipe collar (2) and in particular the wall thickness (w11) of the wear ring (11) is greater than the wall thickness (w3) of the double-walled pipe body (3).

15. Conveying pipe arrangement according to any of the preceding claims, **characterised in that** the pipe collar (2) comprises a circumferential groove (30) on an outer surface (24), in particular a drilled hole (25) being arranged in the groove (30), a tip of the drilled hole (25) extending in the radial direction as far as into the wear ring (11).

## Revendications

1. Agencement tubulaire de transport (1) pour le transport de matières solides, présentant un corps tubulaire (3) à double paroi, avec un collet tubulaire (2) couplé à au moins une extrémité, **caractérisé en ce qu'**une rainure tournante (10) est réalisée dans le collet tubulaire (2) et un anneau d'usure (11) est inséré dans la rainure (10), une ouverture (16) traversant la paroi du collet tubulaire (2) étant agencée sur le côté arrière (23) de l'anneau d'usure (11).

2. Agencement tubulaire de transport selon la revendication 1, **caractérisé en ce que** le collet tubulaire (2) est réalisé à double couche.

3. Agencement tubulaire de transport selon la revendication 1 ou 2, **caractérisé en ce que** l'anneau d'usure (11) est réalisé d'un seul tenant et en un seul matériau sur une couche intérieure (5) du collet tubulaire (2), en particulier la couche intérieure (5) est découpée par tournage dans la zone de l'anneau d'usure (11) sur sa surface enveloppe extérieure (24).

4. Agencement tubulaire de transport selon la revendication 3, **caractérisé en ce qu'**une couche extérieure (4) du collet tubulaire (2) présente un perçage (25) le traversant, une pointe du perçage (25) s'étendant jusque dans l'anneau d'usure (11).

5. Agencement tubulaire de transport selon l'une quelconque des revendications 1 à 4, **caractérisé en ce que** le collet tubulaire (2) est assemblé à l'extrémité du corps tubulaire (3), en particulier par une liaison à force et/ou par complémentarité de forme et/ou de matière, le collet tubulaire (2) est de préférence soudé au corps tubulaire (3).

6. Agencement tubulaire de transport selon l'une quelconque des revendications 1 à 5, **caractérisé en ce que** l'anneau d'usure (11) est collé dans la rainure (10), en particulier avec une colle durcissant de manière anaérobique, l'anneau d'usure (11) est collé de manière particulièrement préférée avec une colle étanche au fluide dans la rainure (10).

7. Agencement tubulaire de transport selon l'une quelconque des revendications précédentes, **caractérisé en ce que** la surface enveloppe intérieure (18) de l'anneau d'usure (11) se termine de manière plane avec la surface enveloppe intérieure (18) du collet tubulaire (2) et/ou la surface enveloppe intérieure (20) du corps tubulaire (3).

8. Agencement tubulaire de transport selon l'une quelconque des revendications précédentes, **caractérisé en ce que** la rainure (10) est agencée sur une extrémité (9) côté corps tubulaire du collet tubulaire (2), la rainure (10) étant encadrée sur le côté du collet tubulaire par la couche intérieure (5) du collet tubulaire (2) et étant encadrée sur le côté du corps tubulaire par le côté avant (15) du corps tubulaire (3).

9. Agencement tubulaire de transport selon l'une quelconque des revendications précédentes, **caractérisé en ce que** l'anneau d'usure (11) présente une épaisseur de paroi (w11) qui correspond à l'épaisseur de paroi (w5) de la couche intérieure (5) du collet tubulaire (2) et/ou à l'épaisseur de paroi (w8) de la couche intérieure (8) du corps tubulaire (3).

10. Agencement tubulaire de transport selon l'une quelconque des revendications précédentes, **caractérisé en ce que** l'anneau d'usure (11) est réalisé dans le même matériau que la couche intérieure (5) du collet tubulaire (2) et/ou la couche intérieure (8) du corps tubulaire (3) ou en ce que l'anneau d'usure (11) est réalisé en un matériau qui présente par rapport au matériau de la couche intérieure (5) du collet tubulaire (2) et/ou de la couche intérieure (8) du corps tubulaire (3) une dureté supérieure et/ou une résistance supérieure, l'anneau d'usure (11) étant réalisé de préférence en un matériau de moulage très résistant.

11. Agencement tubulaire de transport selon l'une quelconque des revendications précédentes, **caractérisé en ce que** l'anneau d'usure (11) est appliqué par un procédé d'application par liaison de matière sur la rainure (10) dans le collet tubulaire (2), en particulier par blindage d'un matériau résistant à l'usure ou par cémentation ou par boruration, par nitruration ou par carbonitruration.

12. Agencement tubulaire de transport selon l'une quelconque des revendications précédentes, **caractérisé en ce qu'**une rainure annulaire (17) est réalisée dans la rainure (10), la rainure annulaire (17) étant réalisée en particulier de manière à tourner radialement et étant reliée par conduction fluidique à l'ouverture (16) et/ou **en ce qu'**une rainure annulaire tournante radialement est réalisée sur le côté arrière de l'anneau d'usure.

13. Agencement tubulaire de transport selon l'une quelconque des revendications 1 à 9 ou 12, **caractérisé en ce que** l'anneau d'usure (11) est réalisé en un matériau qui présente par rapport au matériau de la couche intérieure (5) du collet tubulaire (2) et/ou de la couche intérieure (8) du corps tubulaire (3) une dureté moindre et/ou une résistance moindre.

14. Agencement tubulaire de transport selon l'une quelconque des revendications précédentes, **caractérisé en ce que** l'anneau d'usure (11) est agencé sur une extrémité côté collet tubulaire (28) dans le collet tubulaire (2) et en particulier l'épaisseur de paroi (w11) de l'anneau d'usure (11) est supérieure à l'épaisseur de paroi (w3) du corps tubulaire (3) à double paroi.

15. Agencement tubulaire de transport selon l'une quelconque des revendications précédentes, **caractérisé en ce que** le collet tubulaire (2) présente sur une surface enveloppe extérieure (24) une rainure tournante (30), en particulier un perçage (25) étant agencé dans la rainure (30), une pointe du perçage (25) s'étendant dans le sens radial jusque dans l'anneau d'usure (11).
